# EUROPÄISCHE PATENTANMELDUNG

(11) **EP 2 685 580 A2**
(43) Veröffentlichungstag der Anmeldung: **15.01.2014**
(21) Anmeldenummer: 13169069.5
(22) Anmeldetag: 24.05.2013
(51) Int. Cl.: H02J 3/00

(54) **Vorrichtung zum Ermitteln und/oder Steuern einer Betriebszeit eines mit einem Kraftwerk, insbesondere Photovoltaikkraftwerk, und einem Energiespeicher gekoppelten Verbrauchers, und Verfahren zum Betreiben eines mit einem Kraftwerk gekoppelten Energiespeichers**

(30) Priorität: 13.07.2012 DE 102012212321
(71) Anmelder: ROBERT BOSCH GMBH, 70442 Stuttgart (DE)
(72) Erfinder: Preissner, Marcus, 71665 Vaihingen (DE)

(57) **Zusammenfassung**

Die vorliegende Erfindung betrifft eine Vorrichtung (1) zum Ermitteln und/oder Steuern einer Betriebszeit eines mit einem Kraftwerk (2) und einem Energiespeicher (7) gekoppelten Verbrauchers (5); mit einer ersten Ermittlungseinrichtung (3), welche ausgebildet ist, eine Energieerzeugungsmenge, welche von dem Kraftwerk (2) während eines vergangenen Zeitintervalls erzeugt wurde, zu ermitteln; mit einer zweiten Ermittlungseinrichtung (4), welche ausgebildet ist, den Energieverbrauch des Verbrauches (5) während eines vergangenen Zeitintervalls zu ermitteln; mit einer dritten Ermittlungseinrichtung (6), welche ausgebildet ist, die in dem Energiespeicher (7) aktuell gespeicherte Menge an Energie, welche für einen Betrieb des Verbrauchers (5) vorgesehen ist, zu ermitteln; und mit einer Prognostiziereinrichtung (9), welche ausgebildet ist, unter Berücksichtigung der ermittelten Energieerzeugungsmenge, der ermittelten Menge an gespeicherter Energie und des ermittelten Energieverbrauchs des Verbrauchs eine Betriebszeit, in der der Verbraucher (5) mittels der von dem Kraftwerk erzeugten Energiemenge und der in dem Energiespeicher gespeicherten aktuellen Energiemenge betreibbar ist, zu ermitteln und anzeigen, und/oder mit einer Steuereinrichtung (8), welche ausgebildet ist, eine Betriebszeit des Verbrauchers festzulegen und die in dem Energiespeicher (7) aktuell gespeicherte Menge an Energie, welcher für den Betrieb des Verbrauchers vorgesehen ist, unter Berücksichtigung der ermittelten Energieerzeugungsmenge, der ermittelten Menge an gespeicherter Energie und des ermittelten Energieverbrauchs des Verbrauchers (5) derart anzupassen, dass der Verbraucher (5) für die festgelegte Betriebszeit betreibbar ist.

## Beschreibung

Die vorliegende Erfindung betrifft eine Vorrichtung zum Ermitteln und/oder Steuern einer Betriebszeit eines mit einem Kraftwerk, insbesondere Photovoltaikkraftwerk, und einem Energiespeicher gekoppelten Verbrauchers, und ein Verfahren zum Betreiben eines mit einem Kraftwerk gekoppelten Energiespeichers.

### Stand der Technik

Inselkraftwerke für Gebäude, beispielsweise Photovoltaikanlagen, werden eingesetzt, um elektrische Energie zu erzeugen. Der dabei erzeugte Strom wird üblicherweise zu einem großen Anteil in das öffentliche elektrische Energieversorgungsnetz eingespeist. Hierfür gibt es gegenwärtig Vereinbarungen, bei denen die Betreiber der Photovoltaikanlage eine so genannte Einspeisevergütung erhalten. Dies war in den letzten Jahrzehnten für den Betreiber der Photovoltaikanlage sehr rentabel, da der Betreiber für seinen erzeugten Strom eine garantierte Einspeisevergütung erhalten hat und der Strompreis gesetzlich geregelt war.

Darüber hinaus sind modernere Photovoltaikanlagen bekannt, bei denen ein Teil des von der Photovoltaikanlage erzeugten Stroms von gebäudezugeordneten Verbrauchern selbst verbraucht wird. Eine derartige Verbrauchsgröße wird als Eigenverbrauch bezeichnet. Der Eigenverbrauch bezeichnet dabei die Quote, die anteilsmäßig von der gesamten erzeugten elektrischen Energiemenge der Photovoltaikanlage von gebäudezugeordneten Verbrauchern selbst verbraucht wird. Aufgrund der gegenwärtigen Ausgestaltung und Betriebsweise der Photovoltaikanlagen ist diese Quote jedoch meist sehr gering und beträgt gegenwärtig maximal ca. 30%.

Für eine Steigerung des Eigenverbrauchs wird zumeist ein elektrischer Energiespeicher in die Photovoltaikanlage integriert, welcher ausgebildet ist, nicht direkt genutzte elektrische Energie dort zu speichern und zu Zeiten, in denen die Stromerzeugung geringer als der Stromverbrauch ist, diese Energie aus den Energiespeicher zu entnehmen und auf diese Weise den Bezug von elektrischem Strom aus dem Versorgungsnetz zu reduzieren.

Ferner ist es mit Photovoltaikanlagen möglich, einen Verbraucher autark betreiben zu können. Im Falle eines totalen Netzausfalls kann der Verbraucher in Abhängigkeit des Anteils des Energiespeichers, welcher für den Autarkiebetrieb des Verbrauchers vorgesehen ist, für eine gewisse Zeit autark betrieben werden. Dies hat insbesondere in Ländern mit unzuverlässigen elektrischen Energieversorgungsnetzen eine große Bedeutung.

Die Festlegung des vorzuhaltenden Anteils des Energiespeichers für den autarken Betrieb des Verbrauchers wird am elektrischen Energiespeicher werkseitig oder bei der Inbetriebnahme voreingestellt. Dieser Anteil kann beispielsweise 25% der Kapazität des Energiespeichers betragen. Der für den Autarkiebetrieb vorgesehene Anteil des Energiespeichers steht nicht für den Eigenverbrauch zu Verfügung, was jedoch die Wirtschaftlichkeit der Photovoltaikanlage reduziert.

Je größer der für den Autarkiebetrieb vorgehaltene Anteil, desto mehr reduziert sich die Quote des Eigenverbrauchs. Im Falle eines zu klein gewählten Anteils reicht die gespeicherte Menge an Energie oft nicht aus, um den Verbraucher für die gewünschte Zeit zu betreiben.

Die DE 10 2009 040 090 A1 beschreibt eine Energiesteuerungsvorrichtung für ein Energienetz und ein Verfahren zum Steuern eines Betriebes einer Energiesteuerungsvorrichtung. Für eine bedarfsgerechte und optimierte Versorgung einer mit der Energiesteuerungsvorrichtung verbundenen Lasteinheit wird eine Energiesteuerungsvorrichtung bereitgestellt, welche aufweist: eine Energieerzeugungseinheit, insbesondere eine Photovoltaikeinheit zum Erzeugen von Energie aus erneuerbaren Ressourcen, eine Energiespeichereinheit zum Speichern von Energie, eine Lastanschlusseinheit zum Verbinden der Energiesteuerungsvorrichtung mit einer Lasteinheit zum Verbrauchen von Energie, eine Netzanschlusseinheit, insbesondere eine Wechselrichtereinheit zum Verbinden der Energiesteuerungsvorrichtung mit einem Energienetz, zum Entnehmen von Energie aus dem Energienetz und zum Zuführen von Energie in das Energienetz, und eine Steuereinheit zum Steuern eines Energieflusses zwischen der Energieerzeugungseinheit, der Energiespeichereinheit, der Lasteinheit und/oder dem Energienetz. Mit der Energiesteuerungsvorrichtung kann ein Display verbunden werden, welches die Leistung der einzelnen Anlagen darstellt.

### Offenbarung der Erfindung

Die vorliegende Erfindung stellt eine Vorrichtung zum Ermitteln und/oder Steuern einer Betriebszeit eines mit einem Kraftwerk, insbesondere Photovoltaikkraftwerk, und einem Energiespeicher gekoppelten Verbrauchers mit den Merkmalen des Patentanspruchs 1, und ein Verfahren zum Betreiben eines mit einem Kraftwerk gekoppelten Energiespeichers mit den Merkmalen des Patentanspruchs 8 zur Verfügung.

Demgemäß ist vorgesehen:

Eine Vorrichtung zum Ermitteln und/oder Steuern einer Betriebszeit eines mit einem Kraftwerk und einem Energiespeicher gekoppelten Verbrauchers; mit einer ersten Ermittlungseinrichtung, welche ausgebildet ist, eine Energieerzeugungsmenge, welche von dem Kraftwerk während eines vergangenen Zeitintervalls erzeugt wurde, zu ermitteln; mit einer zweiten Ermittlungseinrichtung, welche ausgebildet ist, den Energieverbrauch des Verbrauchers während eines vergangenen Zeitintervalls zu ermitteln; mit einer dritten Ermittlungseinrichtung, welche ausgebildet ist, die in dem Energiespeicher aktuell gespeicherte Menge an Energie, welche für einen Betrieb des Verbrauchers vorgesehen ist, zu ermitteln; und mit einer Prognostiziereinrichtung, welche ausgebildet ist, unter Berücksichtigung der ermittelten Energieerzeugungsmenge, der ermittelten Menge an gespeicherter Energie und des ermittelten Energieverbrauchs des Verbrauchers eine Betriebszeit, in der der Verbraucher mittels der von dem Kraftwerk erzeugten Energiemenge und der in dem Energiespeicher gespeicherten aktuellen Energiemenge betreibbar ist, zu ermitteln und anzeigen, und/oder mit einer Steuereinrichtung, welche ausgebildet ist, eine Betriebszeit des Verbrauchers festzulegen und die in dem Energiespeicher aktuell gespeicherte Menge an Energie, welcher für den Betrieb des Verbrauchers vorgesehen ist, unter Berücksichtigung der ermittelten Energieerzeugungsmenge, der ermittelten Menge an gespeicherter Energie und des ermittelten Energieverbrauchs des Verbrauchers derart anzupassen, dass der Verbraucher für die festgelegte Betriebszeit betreibbar ist.

Ferner wird ein Verfahren zum Betreiben eines mit einem Kraftwerk, insbesondere Photovoltaikkraffinierk, gekoppelten Energiespeichers, mit folgenden Verfahrensschritten zur Verfügung gestellt:
S1) Ermitteln eines Energieverbrauchs eines mit dem Energiespeicher gekoppelten Verbrauchers in einem vergangenen Zeitintervall;
S2) Ermitteln einer Energieerzeugungsmenge, welche von dem Kraftwerk während eines vergangenen Zeitintervalls erzeugt wurde;
S3) Ermitteln der in dem Energiespeicher aktuell gespeicherten Menge an Energie, welche für einen Betrieb des Verbrauchers vorgesehen ist; und
S4) Ermitteln und Anzeigen einer Betriebszeit für den Verbraucher unter Berücksichtigung der ermittelten Energieerzeugungsmenge, der ermittelten Menge an gespeicherter Energie und des ermittelten Energieverbrauchs des Verbrauchers ; und/oder
S5) Festlegen einer Betriebszeit, in der der Verbraucher mittels der von dem Kraftwerk erzeugten Energiemenge und der in dem Energiespeicher für den Betrieb vorgesehene Menge an Energie betreibbar ist,
S6) Anpassen der in dem Energiespeicher minimal vorzuhaltenden Menge an Energie, welche für den Betrieb des Verbrauchers vorgesehen ist, unter Berücksichtigung der ermittelten Energieerzeugungsmenge, der ermittelten Menge an gespeicherter Energie und des ermittelten Energieverbrauchs des Verbrauchers derart, dass der Verbraucher für die Betriebszeit betreibbar ist.

Dabei ist vorgesehen, dass die Verfahrensschritte S5) und S6) zusätzlich oder alternativ zum Verfahrensschritt S4) durchgeführt werden.

### Vorteile der Erfindung:

Die der Erfindung zugrundeliegende Idee besteht darin, eine Vorrichtung zum Ermitteln und/oder Steuern einer Betriebszeit eines mit einem Kraftwerk und einem Energiespeicher gekoppelten Verbrauchers zur Verfügung zu stellen, mit welcher es möglich ist, eine Betriebszeit eines Verbrauchers anzuzeigen und/oder einzustellen, und dabei den minimal vorzuhaltenden Ladezustand eines dem Kraftwerk, beispielsweise einem Photovoltaikkraftwerk, zugeordnetem Energiespeichers derart anzupassen, dass die Betriebszeit einhaltbar ist. Aus den in der vergangen Zeitraum ermittelten Werten über Energieverbrauch des Verbrauchers, Energieerzeugungsmenge des Kraftwerk und aktuellen Ladezustand des Energiespeichers kann der minimal vorzuhaltende Ladezustand des Energiespeichers derart angepasst werden, dass eine festgelegte Betriebszeit des Verbrauchers einhaltbar ist. Der Benutzer kann auf einfach Weise die gewünschte Betriebszeit des Verbrauchers einstellen und festlegen.

Ferner kann auf diese Weise der Anteil vergrößert werden, welcher in dem Energiespeicher zu Verwendung als Eigenverbrauch reserviert ist. Dadurch kann die das Kraftwerk wirtschaftlicher betrieben werden, was die Betriebskosten senkt und den mit dem Kraftwerk erzielten Gewinn vergrößert.

Der Anteil der Kapazität des Energiespeichers, welcher für den Betrieb des Verbrauchers vorgesehen ist, wird dabei laufend oder in vorherbestimmten Zeitabständen angepasst, sodass der Betrieb sichergestellt ist.

Unter einem Verbraucher ist in diesem Zusammenhang jegliche energieverbrauchende Einrichtung zu verstehen. Der Verbraucher kann beispielsweise ein Herd, eine Heizung, ein Fernseher, elektrische Standby-Verbraucher, Beleuchtung, Warmwasserheizungen, Kühl- und Gefriergeräte, Wasserpumpen, Steuerungsvorrichtungen, Waschmaschinen, eine Industrieanlage, ein Inselsystem oder eine Kombination dieser energieverbrauchenden Einrichtungen sein. Auch kann ein ganzes Gebäude als Verbraucher angesehen werden.

Falls beispielsweise die erste Ermittlungseinrichtung sehr hohe Energieerzeugungsmengen ermittelt hat, kann der Anteil der Kapazität, welcher für den Betrieb des Verbrauchers vorgesehen ist, reduziert werden, da die Photovoltaikanlage voraussichtlich auch weiterhin eine große Menge an Energie erzeugen wird.

Auch kann der Anteil der Kapazität des Energiespeichers, welcher für den Betrieb des Verbrauchers vorgesehen ist, reduziert werden, wenn die zweite Ermittlungseinrichtung ermittelt, dass der Verbraucher sehr wenig Energie in der Vergangenheit verbraucht hat.

In gleicher Weise wird auch der Anteil der Kapazität des Energiespeichers, welcher für den Betrieb des Verbrauchers vorgesehen ist, vergrößert werden, wenn die Ermittlungseinrichtungen feststellen, dass der Verbraucher sehr viel Energie verbraucht hat und das Kraftwerk in der Vergangenheit nur eine geringe Menge an Energie erzeugt hat.

Durch dieses Verfahren und diese Vorrichtung kann ein Energiespeicher auf sehr einfache und komfortable Weise von einem Benutzer betrieben werden, da statt einer werkseitig oder bei der Installation voreingestellten minimal vorzuhaltenden Batteriekapazität die Soll-Betriebszeit für den Verbraucher festgelegt wird, und dadurch die Menge an Energie, welche für den Betrieb, insbesondere für einen autarken Betrieb des Verbrauchers, vorgesehen ist, angepasst wird. Durch Berücksichtigung von zeitlich variablem Verbrauch und Ertrag kann die vorgehaltene Kapazität für den Betrieb zur Erreichung der gewünschten Zeitdauer reduziert werden. Dadurch kann der Eigenverbrauch gesteigert werden, oder die Batteriekapazität kann kleiner dimensioniert werden, was sich beides positiv auf die Wirtschaftlichkeit des Insel-Kraftwerks auswirkt.

Das Kraftwerk ist hierbei beispielhaft für eine Anlage zu verstehen, welche Energie aus erneuerbaren Energien gewinnt. Ebenso kann das Verfahren und die Vorrichtung auf Kraft-Wärme-Kopplungs-Kraftwerke, Wasserkraftwerke, Windkraftanlagen, geothermische Kraftwerke und/oder Gezeitenkraftwerke angepasst werden.

Eine typische Betriebszeit wird in Stunden und Tagen festgelegt und/oder angezeigt, kann aber auch über diesen Zeitraum hinausgehen.

Aus der Analyse von Tageslastgängen, Monatslastgängen und/oder Jahreslastgängen des Verbrauchers und der Tagesenergieerzeugungsmenge, Monatsenergieerzeugungsmenge und/oder Jahresenergieerzeugungsmenge des Kraftwerks, beispielsweise einer Photovoltaikanlage eines Gebäudes, in der Vergangenheit lässt sich zu jedem Zeitpunkt eine Prognose für die Energiemenge für die gewünschte Soll-Betriebszeit erstellen.

Vorteilhafte Ausführungsformen und Weiterbildungen ergeben sich aus den Unteransprüchen sowie aus der Beschreibung unter Bezugnahme auf die Figuren.

In einer bevorzugten Ausführungsform der Erfindung ist die Steuereinrichtung ausgebildet unter Berücksichtigung des Wetters und/oder der Jahreszeit den Ladezustand des Energiespeichers derart anzupassen, dass der Verbraucher für die Betriebszeit betreibbar ist. Hierfür erhält die Steuereinrichtung Mess- oder Prognosewerte von Wettersensoren, z. B. Luftdruck, Temperatur, Feuchtigkeit, Helligkeit etc., welche direkt mit dem Kraftwerk gekoppelt sein können, oder über ein Netzwerk, z. B. Internet oder Funk, an Steuereinrichtung gesendet werden. Auf diese Weise können das Verfahren und die Vorrichtung noch präziser den Ladezustand des Energiespeichers anpassen.

Auch die Prognostiziereinrichtung kann Mess- oder Prognosewerte des Wetters und/oder der Jahreszeit und insbesondere Energieerzeugungsprognosewerte erhalten und für die Prognose berücksichtigen. Auf diese Weise kann die die Prognostiziereinrichtung noch genauer arbeiten.

Beispielsweise kann die Prognostiziereinrichtung auch derart ausgebildet sein, dass diese eine Wahrscheinlichkeit angeben kann, mit der die prognostizierte Betriebszeit eingehalten werden kann. Beispielsweise kann die Prognostiziereinrichtung angeben, dass die gewünschte Betriebszeit mit einer Wahrscheinlichkeit von 95%, 80% oder 50% eingehalten werden kann.

Auch kann die Prognostiziereinrichtung ausgebildet sein, um einem Benutzer den Gewinn anzuzeigen, welcher durch eine Steigerung des Eigenverbrauchs erzielt worden ist, oder voraussichtlich erzielt wird.

In einer weiteren bevorzugten Ausführungsform der Erfindung ist die Prognostiziereinrichtung ausgebildet, die Zeitdauer für unterschiedliche Betriebsformen des Verbrauchers, insbesondere bei Maximalbetrieb, Teilbetrieb, und Minimalbetrieb des Verbrauchers, zu prognostizieren. Der Verbraucher kann beispielsweise als elektrische Heizung oder Klimaanlage ausgebildet sein. Die Prognostiziereinrichtung ist ausgebildet, um unter Berücksichtigung der eingestellten Werte, z. B. ein Maximalbetrieb, Teilbetrieb und Minimalbetrieb des elektrischen Verbrauchers, die Zeit zu prognostizieren, in der der Verbraucher betreibbar ist. Falls der Verbraucher im Maximalbetrieb betrieben wird, verkürzt sich die Betriebszeit des Verbrauchers. Falls der Verbraucher im Minimalbetrieb betrieben wird, verlängert sich die Betriebszeit.

In einer weiteren Ausführungsform der Erfindung ist eine Mensch-Maschine-Schnittstelle mit der Vorrichtung gekoppelt, mittels welcher Daten, z. B. die eingestellte Betriebszeit oder die prognostizierte Betriebszeit einem Benutzer der Vorrichtung anzeigbar ist. Die Mensch-Maschine-Schnittstelle kann beispielsweise als berührungsempfindliches Display oder als Bildschirm mit damit gekoppelten Eingabegeräten ausgebildet sein.

In einer weiteren Ausführungsform der Erfindung ist die Vorrichtung und/oder das Verfahren ausgebildet, den Verbraucher für die Betriebszeit autark zu betreiben. Autark bedeutet in diesem Zusammenhang, dass der Verbraucher ohne jegliche zusätzliche Energiezufuhr von außen, beispielsweise durch ein öffentliches elektrisches Energieversorgungsnetz, betreibbar ist.

In einer weiteren bevorzugten Ausführungsform der Erfindung ist der Energiespeicher als elektrischer Akkumulator, Druckluftspeicher, Schwungrad, Pumpspeicherkraftwerk, supraleitende Spule und/oder Kondensator ausgebildet. Jedoch sind auch andere Formen von Energiespeichern möglich. Beispielsweise kann der Energiespeicher als Li-Ion -Lithium-Cobaltdioxid-Akkumulator, Lithium-Polymer-Akkumulator, Lithium-Mangan-Akkumulator, Lithium-Eisenphosphat-Akkumulator, Lithium-Eisen-Yitrium-Phosphat-Akkumulator, Lithium-Titanat-Akku, Lithium-Schwefel-Akkumulator, Lithium-Metall-Polymer-Akku , Natrium-Nickelchlorid-Hochtemperatur-Batterie, Natrium-Schwefel-Akkumulator, Nickel-Cadmium-Akku, Nickel-Eisen-Akku , Nickel-Wasserstoff-Akkumulator , Nickel-Metallhydrid-Akkumulator, Nickel-Zink-Akkumulator, Bleiakku, Silber-Zink-Akku, Vanadium-Redox-Akkumulator und/oder Zink-Brom-Akku ausgebildet sein.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung. Insbesondere wird dabei der Fachmann auch Einzelaspekte als Verbesserungen oder Ergänzungen zu der jeweiligen Grundform der vorliegenden Erfindung hinzufügen.

### Kurze Beschreibung der Zeichnungen

Die vorliegende Erfindung wird nachfolgend anhand der in den schematischen Figuren der Zeichnungen angegebenen Ausführungsbeispiele näher erläutert. Es zeigen dabei:
- Fig. 1: ein schematisches Blockdiagramm einer Ausführungsform einer Vorrichtung zum Ermitteln und/oder Steuern einer Betriebszeit eines mit einem Kraftwerk und einem Energiespeicher gekoppelten Verbrauchers;
- Fig. 2: ein schematisches Flussdiagramm einer Ausführungsform eines Verfahrens zum Betreiben eines Energiespeichers; und
- Fig. 3: ein schematisches Diagramm, welches die im Energiespeicher minimal vorzuhaltende Menge an Energie während eines Jahres darstellt, welche für einen Betrieb des Verbrauchers vorgesehen ist.

In allen Figuren sind gleiche bzw. funktionsgleiche Elemente und Vorrichtungen - sofern nichts Anderes angegeben ist - mit denselben Bezugszeichen versehen.

### Ausführungsformen der Erfindung

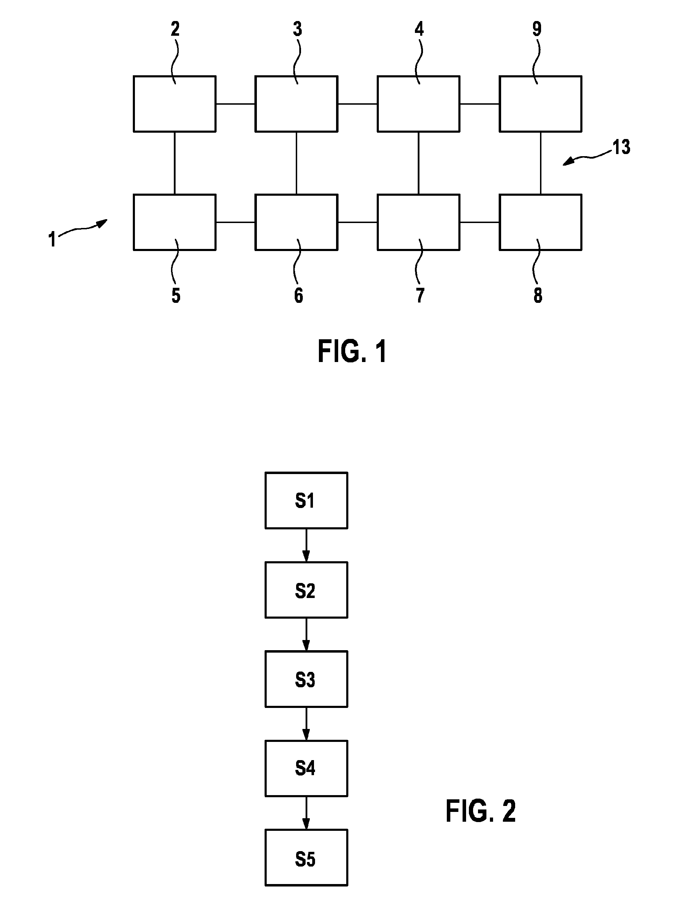

Die Figur 1 zeigt ein schematisches Blockdiagramm einer Ausführungsform einer Vorrichtung zum Ermitteln und/oder Steuern einer Betriebszeit eines mit einem Kraftwerk und einem Energiespeicher gekoppelten Verbrauchers

Die Vorrichtung 1 weist eine erste Ermittlungseinrichtung 3 auf, welche ausgebildet ist, eine Energieerzeugungsmenge, welche von dem Kraftwerk 2, beispielsweise ein Photovoltaikkraftwerk, während eines vergangenen Zeitintervalls erzeugt wurde, zu ermitteln. Beispielsweise weist die erste Ermittlungseinrichtung einen Stromzähler und einen Datenspeicher auf, mittels welchen die Energieerzeugungsmenge ermittelt und gespeichert werden kann. Ferner weist die Vorrichtung 1 eine zweite Ermittlungseinrichtung 4 auf, welche ausgebildet ist, den Energieverbrauch eines Verbrauches 5 während eines vergangenen Zeitintervalls zu ermitteln. Auch die zweite Ermittlungseinrichtung 4 kann einen Stromzähler und einen Datenspeicher aufweisen, welcher den elektrischen Energieverbrauch des Verbrauchers 5 erfasst und speichert.

Des Weiteren ist eine dritte Ermittlungseinrichtung 6 vorgesehen, welche ausgebildet ist, die in einem dem Kraftwerk 2 zugeordneten Energiespeicher 7 aktuell gespeicherte Menge an Energie, welche für einen Betrieb, insbesondere einen autarken Betrieb, des Verbrauchers 5 vorgesehen ist, zu ermitteln.

Eine Steuereinrichtung 8 ist ebenfalls vorgesehen, die ausgebildet ist, eine Betriebszeit oder Soll-Autarkiebetriebszeit des Verbrauchers 5 festzulegen. Die Steuereinrichtung 8 kann beispielsweise ein Touchscreen sein, mittels welchen ein Benutzer die gewünschte Betriebszeit oder Soll-Autarkiebetriebszeit eingeben kann.

Zusätzlich kann gemäß einer weiteren Ausführungsform der Erfindung ein Sicherheitswert eingegeben werden, mittels welchen die Betriebszeit eingehalten werden soll. Der Benutzer kann beispielsweise festlegen, dass eine Betriebszeit von zwei Tagen mit einer Sicherheit von 80% eingehalten werden soll. Ferner ist es möglich, die Betriebsart des Verbrauchers während der Betriebszeit festzulegen. Falls der Verbraucher beispielsweise eine Heizung ist, kann der Benutzer festlegen, dass die Heizung in der Betriebszeit mit Maximalleistung, Teilleistung oder Minimalleistung betrieben werden soll. Dies wirkt sich ebenfalls auf die Menge an Energie aus, welche für den Betrieb, insbesondere für den autarken Betrieb, des Verbrauchers in dem Energiespeicher vorgehalten werden soll.

Die Steuereinrichtung 8 ist ebenfalls ausgebildet, die in dem Energiespeicher 7 aktuell gespeicherte Menge an Energie, welcher für den Betrieb des Verbrauchers 5 vorgesehen ist, unter Berücksichtigung der ermittelten Energieerzeugungsmenge, der ermittelten Menge an gespeicherter Energie und des ermittelten Energieverbrauchs des Verbrauchs 5 derart anzupassen, dass der Verbraucher 5 für die Betriebszeit, insbesondere für die Soll-Autarkiebetriebszeit, betreibbar ist.

Alle Systemkomponenten, insbesondere die Photovoltaikanlage 1, die erste Ermittlungseinrichtung 3, die zweiter Ermittlungseinrichtung,4, der Verbraucher 5, die dritte Ermittlungseinrichtung 6, der Energiespeicher 7, die Prognostiziereinrichtung 9 und die Steuereinrichtung 8 sind über ein Leistung- und Kommunikationsnetzwerk 13 miteinander gekoppelt.

Die Figur 2 zeigt ein schematisches Flussdiagramm einer Ausführungsform eines Verfahrens zum Betreiben eines Energiespeichers. Im Schritt S1 wird ein Energieverbrauch eines Verbrauchers 7 in einem vergangenen Zeitintervall ermittelt. Bei Schritt S2 erfolgt ein Ermitteln einer Energieerzeugungsmenge, welche von dem Kraftwerk 2 während des vergangenen Zeitintervalls erzeugt wurde. Im Schritt S3 findet ein Ermitteln der in einem dem Kraftwerk 2 zugeordneten Energiespeicher aktuell gespeicherten Menge an Energie, welche für einen Betrieb, insbesondere einen autarken Betrieb, des Verbrauchers 5 vorgesehen ist, statt. Bei Schritt S4 wird eine Betriebszeit, in der der Verbraucher 5 mittels der von dem Kraftwerk 2 erzeugten Energiemenge und der in dem Energiespeicher 7 für den Betrieb, insbesondere für den autarken Betrieb, vorgesehenen Menge an Energie betreibbar ist, festgelegt.

Im Schritt S5 erfolgt ein Anpassen der in dem Energiespeicher 7 minimal zu speichernden Menge an Energie, welcher für den Betrieb des Verbrauchers 5 vorgesehen ist, unter Berücksichtigung der ermittelten Energieerzeugungsmenge, der ermittelten Menge an gespeicherter Energie und des ermittelten Energieverbrauchs des Verbrauchs derart, dass der Verbraucher 5 für die Betriebszeit autark betreibbar ist. Das Anpassen erfolgt beispielsweise durch Laden oder Entladen des Energiespeichers, oder durch eine Änderung der Menge an minimal vorzuhaltender Energie, welche für den Betrieb, beispielsweise für den autarken Betrieb, des Verbrauchers in dem Energiespeicher vorgesehen ist.

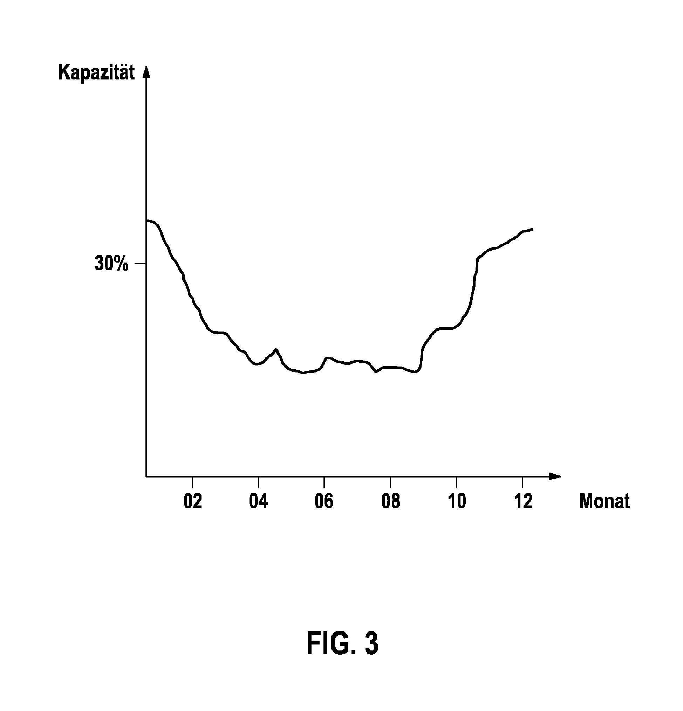

Figur 3 ist ein schematisches Diagramm, welches die Menge an Energie während eines Jahres darstellt, welche für einen Betrieb des Verbrauchers vorgesehen ist. Auf der vertikalen Achse wird der Anteil der Kapazität des Energiespeichers dargestellt, welcher für einen Betrieb des Verbrauchers reserviert ist. Auf der horizontalen Achse sind die Monate eines Jahres dargestellt. Das dargestellte Diagramm ist nur beispielhaft zu verstehen und dient nur der Erläuterung der Funktionsweise der Vorrichtung und des Verfahrens.

In den Wintermonaten, beispielsweise im Januar oder Februar, wird die Menge an Energie, welche für den Betrieb des Verbrauchers vorzuhalten ist, erhöht. Dies kommt zustande, da in den Wintermonaten einerseits die Energieerzeugungsmenge des Kraftwerks, insbesondere eines Photovoltaikkraftwerks, gering ist und andererseits der Energieverbrauch des Verbrauchers hoch ist. Daher passt die Steuereinrichtung die Menge an Energie, welche für den Betrieb des Verbrauchers im Energiespeicher vorzuhalten ist, an die Bedingungen im Winter an.

In den Sommermonaten, z. B. im Juli oder August, kann die Menge an Energie, welche für den Betrieb des Verbrauchers vorzuhalten ist, reduziert werden, da das Kraftwerk, beispielsweise eine Photovoltaikkraftwerk oder ein Wasserkraftwerk, in den Sommermonaten mehr Energie erzeugen kann und der Verbraucher in den Sommermonaten eine nicht so große Menge an Energie verbraucht.

Durch die Reduktion der vorzuhaltenden Energiemenge erhöht sich unter Beibehaltung der gewählten Autarkiezeit die Speicherkapazität zur Erhöhung des Eigenverbrauchs.

Obwohl die vorliegende Erfindung anhand bevorzugter Ausführungsbeispiele vorstehend beschrieben wurde, ist sie darauf nicht beschränkt, sondern auf vielfältige Art und Weise modifizierbar. Insbesondere lässt sich die Erfindung in mannigfaltiger Weise verändern oder modifizieren, ohne vom Kern der Erfindung abzuweichen.

## Patentansprüche

1. Vorrichtung (1) zum Ermitteln und/oder Steuern einer Betriebszeit eines mit einem Kraftwerk (2) und einem Energiespeicher (7) gekoppelten Verbrauchers (5);
mit einer ersten Ermittlungseinrichtung (3), welche ausgebildet ist, eine Energieerzeugungsmenge, welche von dem Kraftwerk (2) während eines vergangenen Zeitintervalls erzeugt wurde, zu ermitteln;
mit einer zweiten Ermittlungseinrichtung (4), welche ausgebildet ist, den Energieverbrauch des Verbrauchers (5) während eines vergangenen Zeitintervalls zu ermitteln;
mit einer dritten Ermittlungseinrichtung (6), welche ausgebildet ist, die in dem Energiespeicher (7) aktuell gespeicherte Menge an Energie, welche für einen Betrieb des Verbrauchers (5) vorgesehen ist, zu ermitteln; und
mit einer Prognostiziereinrichtung (9), welche ausgebildet ist, unter Berücksichtigung der ermittelten Energieerzeugungsmenge, der ermittelten Menge an gespeicherter Energie und des ermittelten Energieverbrauchs des Verbrauchers (5) eine Betriebszeit, in der der Verbraucher (5) mittels der von dem Kraftwerk (2) erzeugten Energiemenge und der in dem Energiespeicher (7) gespeicherten aktuellen Energiemenge betreibbar ist, zu ermitteln und anzeigen,
und/oder
mit einer Steuereinrichtung (8), welche ausgebildet ist, eine Betriebszeit des Verbrauchers (5) festzulegen und die in dem Energiespeicher (7) aktuell gespeicherte Menge an Energie, welcher für den Betrieb des Verbrauchers (5) vorgesehen ist, unter Berücksichtigung der ermittelten Energieerzeugungsmenge, der ermittelten Menge an gespeicherter Energie und des ermittelten Energieverbrauchs des Verbrauchers (5) derart anzupassen, dass der Verbraucher (5) für die festgelegte Betriebszeit betreibbar ist.

2. Vorrichtung nach einem der Ansprüche 1,
**dadurch gekennzeichnet, dass**
die Steuereinrichtung (8) ausgebildet ist unter Berücksichtigung des Wetters und/oder der Jahreszeit die aktuell gespeicherten Menge an Energie, welcher für den Betrieb des Verbrauchers (5) vorgesehen ist, derart anzupassen, dass der Verbraucher (5) für die Betriebszeit betreibbar ist.

3. Vorrichtung nach Anspruch 1 oder 2,
**dadurch gekennzeichnet, dass**
die Prognostiziereinrichtung (9) ausgebildet ist unter Berücksichtigung des Wetters und/oder der Jahreszeit die Betriebszeit zu ermitteln.

4. Vorrichtung (1) nach einem der vorherigen Ansprüche,
**dadurch gekennzeichnet, dass**
die Prognostiziereinrichtung (9) ausgebildet ist, die Betriebszeit für unterschiedliche Betriebsformen des Verbrauchers (5), insbesondere bei Maximalbetrieb, Teilbetrieb, und Minimalbetrieb des Verbrauchers(5), zu ermitteln.

5. Vorrichtung (1) nach einem der vorherigen Ansprüche,
**dadurch gekennzeichnet,**
**dass** die Steuereinrichtung (8) ausgebildet ist, die in dem Energiespeicher (7) gespeicherte Menge an Energie derart anzupassen, dass der Verbraucher (8) in unterschiedlichen Betriebsformen, insbesondere im Maximalbetrieb, Teilbetrieb, und im Minimalbetrieb betreibbar ist.

6. Vorrichtung (1) nach einem der vorhergehenden Ansprüche,
**dadurch gekennzeichnet,**
**dass** die Vorrichtung (1) als zentrale Recheneinrichtung (11) und/oder als dezentrale Recheneinrichtung ausgebildet ist.

7. Vorrichtung (1) nach einem der vorhergehenden Ansprüche,
**dadurch gekennzeichnet,**
**dass** das Zeitintervall Minuten, Stunden, Tage, Wochen, Monate und/oder Jahre beträgt.

8. Vorrichtung (1) nach einem der vorhergehenden Ansprüche,
**dadurch gekennzeichnet,**
**dass** die Steuereinrichtung (1) ausgebildet ist, die in dem Energiespeicher (7) gespeicherte Menge an Energie derart zu passen, dass der Verbraucher (5) für die Betriebszeit autark betreibbar ist.

9. Verfahren zum Betreiben eines mit einem Kraftwerk (2), insbesondere Photovoltaikkraffinierk, gekoppelten Energiespeichers (7), mit folgenden Verfahrensschritten:
S1) Ermitteln eines Energieverbrauchs eines mit dem Energiespeicher (7) gekoppelten Verbrauchers (5) in einem vergangenen Zeitintervall;
S2) Ermitteln einer Energieerzeugungsmenge, welche von dem Kraftwerk (2) während eines vergangenen Zeitintervalls erzeugt wurde;
S3) Ermitteln der in dem Energiespeicher (7) aktuell gespeicherten Menge an Energie,
welche für einen Betrieb des Verbrauchers (5) vorgesehen ist; und
S4) Ermitteln und Anzeigen einer Betriebszeit für den Verbraucher (5) unter Berücksichtigung der ermittelten Energieerzeugungsmenge, der ermittelten Menge an gespeicherter Energie und des ermittelten Energieverbrauchs des Verbrauchers (5);
und/oder
S5) Festlegen einer Betriebszeit, in der der Verbraucher (5) mittels der von dem Kraftwerk (2) erzeugten Energiemenge und der in dem Energiespeicher (7) für den Betrieb vorgesehene Menge an Energie betreibbar ist,
S6) Anpassen der in dem Energiespeicher (7) minimal vorzuhaltenden Menge an Energie, welche für den Betrieb des Verbrauchers (5) vorgesehen ist, unter Berücksichtigung der ermittelten Energieerzeugungsmenge, der ermittelten Menge an gespeicherter Energie und des ermittelten Energieverbrauchs des Verbrauchers (5) derart, dass der Verbraucher (5) für die Betriebszeit betreibbar ist.
